# EUROPEAN PATENT APPLICATION

(11) **EP 4 197 890 A1**
(43) Date of publication of application: **21.06.2023**
(21) Application number: 22196062.8
(22) Date of filing: 16.09.2022
(51) Int. Cl.: B62K 5/08, B62K 5/06, B62K 5/05, B62K 7/04, B62K 21/00, B62K 19/46, B62J 23/00, B62M 6/40, B62K 5/10, B62M 6/65

(54) **TRAVELING VEHICLE**

(30) Priority: 14.12.2021 JP 2021202224
(71) Applicant: KAWASAKI MOTORS, LTD., Akashi-shi, Hyogo 673-8666 (JP)
(72) Inventor: ISHII, Hiroshi, Akashi-shi, Hyogo 673-8666 (JP); NAKAJIMA, Takeshi, Akashi-shi, Hyogo 673-8666 (JP); NARUMI, Tadashi, Akashi-shi, Hyogo 673-8666 (JP); UEDA, Kazuki, Akashi-shi, Hyogo 673-8666 (JP)
(74) Representative: Hoefer & Partner Patentanwälte mbB

(57) **Abstract**

There is provided a traveling vehicle (1) including: a vehicle body (2); a front wheel (10, 20) that is rotatably supported on the vehicle body and is pivotable about a pivot axis (c1); an operation member (5) that is rotationally operated to pivot the front wheel; and a steering shaft (6) that is operated by the operation member. In a lateral view of the traveling vehicle, the steering shaft is disposed behind the pivot axis, and the steering shaft is substantially parallel to the pivot axis. According to the traveling vehicle of the present disclosure, it is possible to implement a layout in which a large space is easily secured in front of the steering shaft in the traveling vehicle.

## Description

### TECHNICAL FIELD

The present disclosure relates to a traveling vehicle.

### BACKGROUND ART

This kind of vehicle is disclosed in, for example, JP2001-010577A. A front two-wheel three-wheeled bicycle in JP2001-010577A includes a frame body.

A front half portion of the frame body is provided with a lower suspension arm shaft in a front-rear direction. For example, when a handle is turned to left, the front wheels are directed to a left side, and the frame body is forcibly inclined leftward about the lower suspension arm shaft.

Depending on the use of a traveling vehicle, there is a need to load a large number of baggage on the vehicle. Unfortunately, in the above configuration, it is difficult to secure a large baggage loading space.

### SUMMARY OF INVENTION

According to the present disclosure, it is possible to implement a layout in which a large space is easily secured in front of a steering shaft in a traveling vehicle.

The present disclosure is illustratively described below.

According to an illustrative aspect of the present disclosure, a traveling vehicle includes: a vehicle body; a front wheel that is rotatably supported on the vehicle body and is pivotable about a pivot axis; an operation member that is rotationally operated to pivot the front wheel; and a steering shaft that is operated by the operation member. As viewed laterally the traveling vehicle, the steering shaft is disposed behind the pivot axis, and the steering shaft is substantially parallel to the pivot axis.

According to the above aspect, it is possible to implement a layout in which a large space is easily secured in front of and below the steering shaft. In addition, since the steering shaft and the pivot axis of the front wheel are parallel to each other, the steering feeling is good.

According to the present disclosure, it is possible to implement a layout in which a large space is easily secured in front of the steering shaft in the traveling vehicle.

### BRIEF DESCRIPTION OF DRAWINGS

Fig. 1 is a perspective view showing an overall configuration of a three-wheeled bicycle according to an embodiment of the present disclosure.
Fig. 2 is a side view of the three-wheeled bicycle.
Fig. 3 is a perspective view of the three-wheeled bicycle as viewed from front and above.
Fig. 4 is a perspective view showing a state in which a handle is pivoted leftward from a state in Fig. 1.

### DESCRIPTION OF EMBODIMENTS

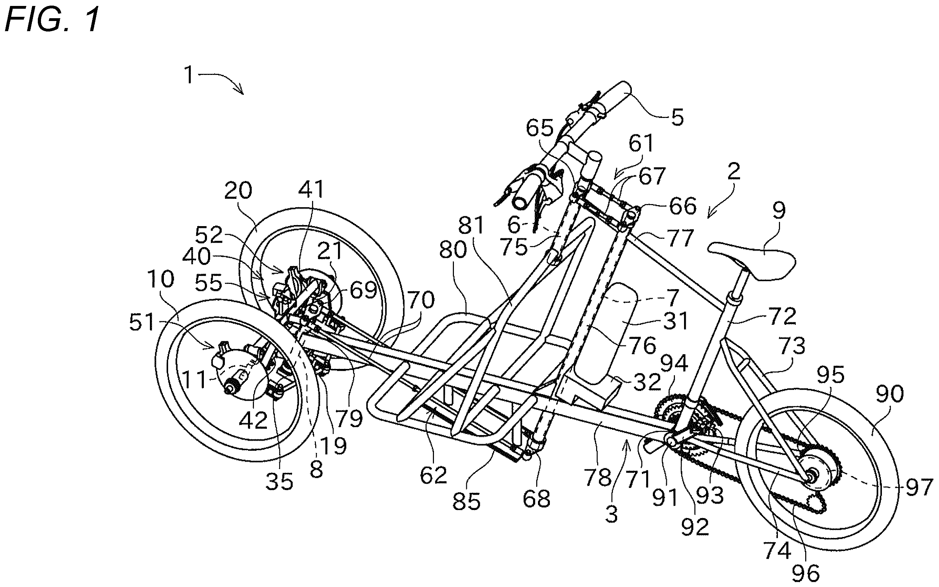

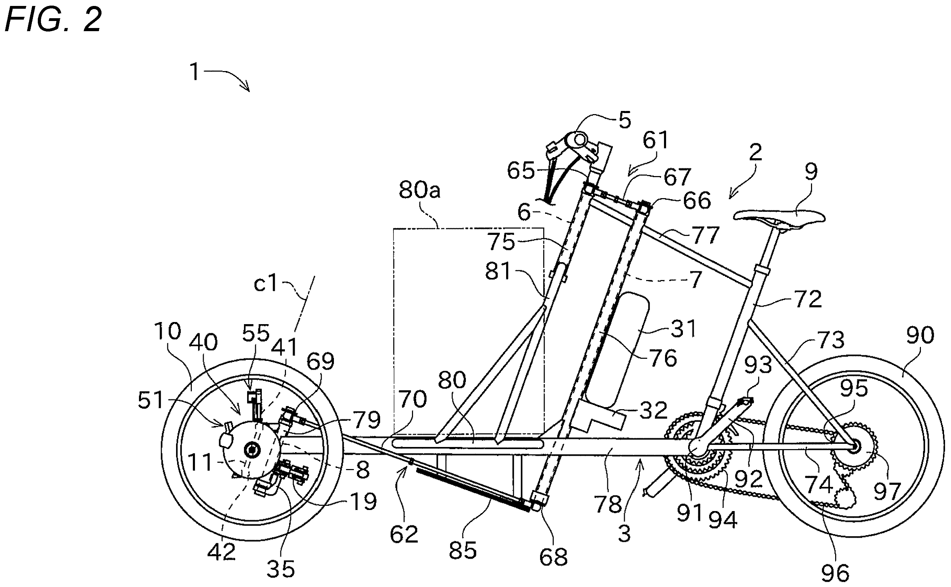

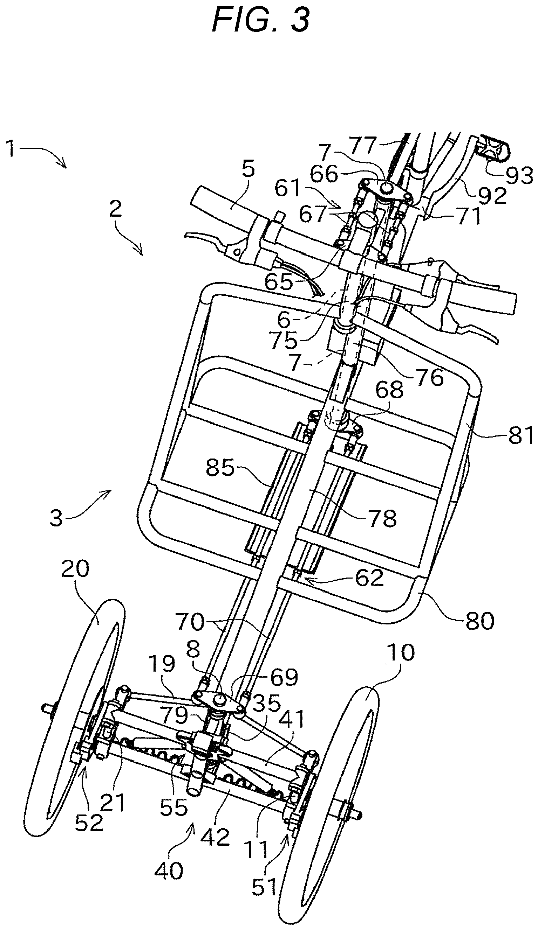

Next, an embodiment disclosed will be described with reference to the drawings. Fig. 1 is a perspective view showing an overall configuration of a three-wheeled bicycle 1 according to an embodiment of the present disclosure. Fig. 2 is a side view of the three-wheeled bicycle 1. Fig. 3 is a perspective view of the three-wheeled bicycle 1 as viewed from front and above.

In the following description, a direction viewed from a rider riding on the three-wheeled bicycle (traveling vehicle) 1 is defined as a left-right direction of the three-wheeled bicycle 1. Therefore, in a state in which the three-wheeled bicycle 1 is upright, a front-rear direction coincides with a vehicle length direction, and the left-right direction coincides with a vehicle width direction. In addition, an up-down direction (vertical direction) coincides with a height direction.

In the present description, a case where a certain member is "attached" to a corresponding member includes a case where the member is indirectly attached via another member, in addition to a case where the member is directly attached. The same applies to "fixed", "supported", and "coupled".

The three-wheeled bicycle 1 is configured as a front two-wheeled vehicle. The three-wheeled bicycle 1 includes a vehicle body 2, a left front wheel (first front wheel) 10, a right front wheel (second front wheel) 20, and a rear wheel 90. The vehicle body 2 supports the left front wheel 10, the right front wheel 20, and the rear wheel 90. The vehicle body 2 includes a frame 3 serving as a framework of the three-wheeled bicycle 1.

The three-wheeled bicycle 1 is a kind of lean-type vehicle. The lean-type vehicle means a vehicle in which a posture of the vehicle body 2 with respect to a road surface can be changed and the vehicle body 2 is inclined with respect to the road surface as the vehicle pivots by steering. Hereinafter, a state in which a handle 5 (described later) for steering is operated to a neutral position and the vehicle body 2 is upright with respect to the road surface (in other words, normal straight traveling state) may be referred to as a reference state. In the following description, the reference state is assumed unless otherwise specified.

The left front wheel 10 is disposed on a left side (first side) relative to the center in the vehicle width direction. The right front wheel 20 is disposed on a right side (second side) relative to the center in the vehicle width direction. The left front wheel 10 and the right front wheel 20 are supported by the frame 3 via a lean mechanism 40. Details of the lean mechanism 40 will be described later.

The rear wheel 90 is disposed at the center in the vehicle width direction and is rotatably supported by a rear end portion of the frame 3.

The frame 3 will be described. The frame 3 is disposed at the center in the width direction of the three-wheeled bicycle 1. The frame 3 is configured by connecting a plurality of frame members by welding or the like.

The frame 3 includes a bottom cylinder portion 71, a seat tube 72, seat stays 73, chain stays 74, a steering cylinder portion 75, a transmission cylinder portion 76, a top tube 77, a down tube 78, an output cylinder portion 79, a baggage receiving portion 80, and coupling portions 81.

In the present description, the "cylinder portion" means a portion in which a bearing that rotatably supports a shaft body is interposed and which is formed in a cylindrical shape. The "tube" means a portion formed in a solid shape or a hollow shape.

The bottom cylinder portion 71 is a member extending linearly in the vehicle width direction. The bottom cylinder portion 71 is formed in a cylindrical shape facing the vehicle width direction. The bottom cylinder portion 71 may be referred to as a bottom bracket shell. A crankshaft 91 is rotatably supported by the bottom cylinder portion 71. The crankshaft 91 is disposed so as to face the vehicle width direction. A pair of left and right pedals 93 are supported at two ends of the crankshaft 91 via cranks 92, respectively.

A front sprocket 94 is supported in the vicinity of the bottom cylinder portion 71. The front sprocket 94 rotates integrally with the cranks 92 and the crankshaft 91.

The seat tube 72 is formed so as to linearly extend rearward and upward from the bottom cylinder portion 71. A seat 9 is fixed to an upper portion of the seat tube 72 via a rod-shaped seat post.

The rider can place his/her feet on the left and right pedals 93 across the seat 9. In this way, the three-wheeled bicycle 1 is a kind of vehicle (straddle-type vehicle) on which the rider rides across the seat 9.

The seat stays 73 are formed so as to extend rearward and downward from the upper portion of the seat tube 72.

The chain stays 74 are formed so as to extend rearward substantially horizontally from the bottom cylinder portion 71.

A pair of seat stays 73 and a pair of chain stays 74 are disposed so as to sandwich the rear wheel 90 in the left-right direction. Rear end portions of the seat stay 73 and the chain stay 74 are connected to each other on the left side and the right side, respectively, and the rear wheel 90 is rotatably supported by the portions.

A rear sprocket 95 is attached to the rear wheel 90. A chain 96 is wound between the front sprocket 94 and the rear sprocket 95. As described above, a force with which the rider steps on the pedals 93 with his/her feet is transmitted to the rear wheel 90, and the rear wheel 90 can be driven by human power.

An electric motor 97 is attached to an axle portion of the rear wheel 90. By driving the electric motor 97, it is possible to assist driving of the rear wheel 90 by human power. The electric motor 97 may be used as a drive source for causing the three-wheeled bicycle 1 to be self-propelling without human power. The electric motor 97 may be used as a generator.

The steering cylinder portion 75 is a cylindrical portion that is formed in an elongated manner so as to extend substantially linearly in the up-down direction. The steering cylinder portion 75 is disposed in a slightly rearward inclined posture. That is, the steering cylinder portion 75 is inclined rearward and extends upward from a lower end. The steering cylinder portion 75 is located behind axles of the left and right front wheels 10 and 20 and behind pivot axes of the front wheels 10 and 20.

The steering cylinder portion 75 is inserted with a lower portion of a steering shaft 6. The steering shaft 6 is rotatably supported by the steering cylinder portion 75.

The handle (operation member) 5 is attached to an upper portion of the steering shaft 6. The handle 5 is formed in a rod shape (bar handle), and a central portion thereof in the left-right direction is fixed to an upper end of the steering shaft 6. The rider can grip the handle 5 with his/her hands and operate the handle 5 for steering. The steering shaft 6 is rotated about an axis line of the steering cylinder portion 75 with respect to the steering cylinder portion 75 by an operation, by the rider, of rotating the handle 5.

A gap in the up-down direction is formed between a lower end portion of the steering cylinder portion 75 and the down tube 78 to be described later. The lower end portion of the steering cylinder portion 75 is coupled to an end portion of the baggage receiving portion 80 included in the frame 3 in the vehicle width direction via the pair of left and right coupling portions 81. The baggage receiving portion 80 will be described later. The vicinity of an upper end portion of the steering cylinder portion 75 is coupled to the transmission cylinder portion 76 via the top tube 77. The steering cylinder portion 75 includes a portion that protrudes upward from a connection portion with the top tube 77.

Similarly to the steering cylinder portion 75, the transmission cylinder portion 76 is a cylindrical portion that is formed in an elongated manner so as to extend substantially linearly in the up-down direction. The transmission cylinder portion 76 is disposed in a slightly rearward inclined posture. That is, the transmission cylinder portion 76 is inclined rearward and extends upward from a lower end.

The transmission cylinder portion 76 is disposed behind the steering cylinder portion 75 and between the steering cylinder portion 75 and the seat tube 72. An interval in the front-rear direction is formed between the steering cylinder portion 75 and the transmission cylinder portion 76. The transmission cylinder portion 76 is disposed parallel to the steering cylinder portion 75. Here, terms "parallel", "perpendicular" and the like may be referred to as "substantially parallel" and "substantially perpendicular". That is, the terms "parallel" and "perpendicular" do not only mean completely "parallel" and "perpendicular", but also intend to provide some ranges to the meanings thereof, which are understandable for a person skilled in the art. Hereinafter, the terms "parallel" and "perpendicular" are used as description in the present embodiment.

The transmission cylinder portion 76 is inserted with an operation transmission shaft 7. The operation transmission shaft 7 is rotatably supported by the transmission cylinder portion 76. An upper end portion of the operation transmission shaft 7 is coupled to the steering shaft 6 by a first link mechanism 61 including parallel link mechanisms. Details of the first link mechanism 61 will be described later.

The top tube 77 is fixed so as to intersect with an upper portion of the transmission cylinder portion 76. The top tube 77 couples the transmission cylinder portion 76 and the steering cylinder portion 75. In addition, the top tube 77 couples the transmission cylinder portion 76 and the seat tube 72. The transmission cylinder portion 76 includes a portion that protrudes upward from a connection portion with the top tube 77.

The down tube 78 is fixed so as to intersect with the vicinity of a lower portion of the transmission cylinder portion 76. The down tube 78 couples the transmission cylinder portion 76 and the bottom cylinder portion 71. In addition, the down tube 78 couples the transmission cylinder portion 76 and the output cylinder portion 79 and the baggage receiving portion 80 in front of the transmission cylinder portion 76. The transmission cylinder portion 76 includes a portion that protrudes downward from a connection portion with the down tube 78.

A battery 31 and a controller 32 are disposed immediately behind the transmission cylinder portion 76 and above the down tube 78. The battery 31 supplies electric power to the electric motor 97. The controller 32 controls the electric motor 97.

The down tube 78 is a linear portion directed in the front-rear direction. The down tube 78 is formed so as to extend linearly forward and substantially horizontally from the bottom cylinder portion 71. The down tube 78 is connected to the output cylinder portion 79 disposed at a front end of the frame 3.

The down tube 78 is configured by, for example, a thick rectangular cylindrical member. The down tube 78 extends in the front-rear direction so as to couple the bottom cylinder portion 71 and the transmission cylinder portion 76. The down tube 78 includes a portion that protrudes further forward than the transmission cylinder portion 76. The baggage receiving portion 80 is fixed to this forward protruding portion. The output cylinder portion 79 is fixed to a front end portion of the down tube 78.

The baggage receiving portion 80 is formed so as to protrude from the down tube 78 in the left-right direction. As shown in Fig. 3, the baggage receiving portion 80 is formed in a rectangular shape in a plan view. As shown in Fig. 2, a baggage compartment 80a in which a baggage can be placed is formed directly above the baggage receiving portion 80. In other words, the baggage receiving portion 80 constitutes a bottom surface of the baggage compartment 80a. The handle 5, the steering cylinder portion 75, and the transmission cylinder portion 76 are located behind the baggage compartment 80a.

The baggage compartment 80a is disposed behind a rear end of the left front wheel 10 and a rear end of the right front wheel 20. Accordingly, even when the left front wheel 10 and the right front wheel 20 pivot, interference with the baggage compartment 80a can be prevented.

An upper surface of the baggage receiving portion 80 is a substantially horizontal baggage receiving surface. The baggage receiving surface is located above the axles of the left front wheel 10 and the right front wheel 20. The baggage receiving surface is located below upper end portions of the left front wheel 10 and the right front wheel 20. Accordingly, the center of gravity of the baggage compartment 80a can be lowered.

The steering cylinder portion 75 is formed to be shorter than the transmission cylinder portion 76. In other words, the steering shaft 6 is formed to be shorter than the operation transmission shaft 7. A gap is formed between a lower end of the steering shaft 6 and a lower portion of the frame 3 (specifically, down tube 78). When the steering shaft 6 is extended downward in an axial direction, an extension thereof intersects with the baggage compartment 80a. With the layout of the steering shaft 6, it is possible to secure a large space for the baggage compartment 80a while reducing a length of the vehicle in the front-rear direction.

As described above, the battery 31 and the controller 32 are disposed behind the transmission cylinder portion 76. Accordingly, it is possible to implement a layout in which the wide baggage compartment 80a is easily secured.

Two left and right end portions of the baggage receiving portion 80 are fixed to the steering cylinder portion 75 via the pair of left and right coupling portions 81. A portion of the transmission cylinder portion 76 passing through the down tube 78 is close to a portion where a rear end portion of the baggage receiving portion 80 is fixed to the down tube 78.

The pair of left and right coupling portions 81 are branched and extend obliquely downward on the left and right sides from the lower end portion of the steering cylinder portion 75 so as to sandwich the baggage compartment 80a. Each of the coupling portions 81 is formed so as to branch into two in a side view at an end portion of the baggage compartment 80a in the left-right direction. Each branched portion extends forward and downward so as to pass immediately outside the end portion of the baggage compartment 80a in the left-right direction, and a lower end portion thereof is bonded to the baggage receiving portion 80. Similarly to the top tube 77, the down tube 78, the seat stays 73, the chain stays 74, and the baggage receiving portion 80, the coupling portion 81 is a kind of strength member.

As shown in Fig. 2 and the like, the coupling portions 81 are bonded to the baggage receiving portion 80 while forming a triangular shape in the side view. Accordingly, the mechanical strength of the baggage receiving portion 80 and the coupling portions 81 can be increased.

Similarly to the steering cylinder portion 75 and the transmission cylinder portion 76, the output cylinder portion 79 is a cylindrical portion that is formed in an elongated manner so as to extend substantially linearly in the up-down direction. The output cylinder portion 79 is disposed in a slightly rearward inclined posture. That is, the output cylinder portion 79 is inclined rearward and extends upward from a lower end.

The output cylinder portion 79 is disposed in front of all of the steering cylinder portion 75, the transmission cylinder portion 76, and the baggage receiving portion 80. The output cylinder portion 79 is disposed parallel to the steering cylinder portion 75 and the transmission cylinder portion 76.

The output cylinder portion 79 is located between the left front wheel 10 and the right front wheel 20. The output cylinder portion 79 is located behind the axles of the left front wheel 10 and the right front wheel 20. The output cylinder portion 79 is formed with a lower portion extending downward with respect to a connection position with the down tube 78 and an upper portion extending upward with respect to the connection position.

The output cylinder portion 79 is inserted with a steering output shaft 8. The steering output shaft 8 is rotatably supported by the output cylinder portion 79. An upper end portion of the steering output shaft 8 is coupled to a lower end portion of the operation transmission shaft 7 by a second link mechanism 62 including parallel link mechanisms. Details of the second link mechanism 62 will be described later.

Next, the first link mechanism 61 that couples the steering shaft 6 and the operation transmission shaft 7 will be described.

The first link mechanism 61 includes a first output arm 65, a first input arm 66, and link rods (link members) 67.

The first output arm 65 is disposed above an upper end of the steering cylinder portion 75. The first output arm 65 is a plate-shaped member formed in a substantially rhombus shape. The first output arm 65 includes a pair of left and right arm portions.

The first output arm 65 is fixed to the steering shaft 6. Therefore, the first output arm 65 rotates integrally with the steering shaft 6. A thickness direction of the first output arm 65 is parallel to a rotation axis of the steering shaft 6. Therefore, rotation of the first output arm 65 is performed in a plane perpendicular to the rotation axis of the steering shaft 6.

The first input arm 66 is disposed above an upper end of the transmission cylinder portion 76. The first input arm 66 is a plate-shaped member formed in a substantially rhombus shape. The first input arm 66 includes a pair of left and right arm portions.

The first input arm 66 is fixed to the operation transmission shaft 7. Therefore, the first input arm 66 rotates integrally with the operation transmission shaft 7. A thickness direction of the first input arm 66 is parallel to a rotation axis of the operation transmission shaft 7. Therefore, rotation of the first input arm 66 is performed in a plane perpendicular to the rotation axis of the operation transmission shaft 7.

A pair of left and right link rods 67 are provided. Each of the link rods 67 is disposed in an elongated manner in the front-rear direction in the plan view. Direction of each link rod 67 is perpendicular to the rotation axis of the steering shaft 6 and is perpendicular to the rotation axis of the operation transmission shaft 7.

One link rod 67 couples a left end of the first output arm 65 and a left end of the first input arm 66. The other link rod 67 couples a right end of the first output arm 65 and a right end of the first input arm 66. Spherical bearings (bearings having three degrees of freedom) are used for all of four coupling portions. Accordingly, an assembly error and the like can be absorbed, and a smooth operation can be implemented.

In this configuration, when the steering shaft 6 rotates, the two link rods 67 move in the plane perpendicular to the rotation axis of the steering shaft 6, and the rotation is transmitted to the operation transmission shaft 7. In this way, the operation transmission shaft 7 can be rotated by the same angle in conjunction with the rotation of the steering shaft 6.

Next, the second link mechanism 62 that couples the operation transmission shaft 7 and the steering output shaft 8 will be described.

A principle by which the second link mechanism 62 couples the operation transmission shaft 7 and the steering output shaft 8 is the same as a principle by which the first link mechanism 61 couples the steering shaft 6 and the operation transmission shaft 7.

The second link mechanism 62 includes a second output arm 68, a second input arm 69, and link rods (interlocking members) 70.

The second output arm 68 is disposed below a lower end of the transmission cylinder portion 76. The second output arm 68 is a plate-shaped member formed in a substantially rhombus shape. The second output arm 68 includes a pair of left and right arm portions.

The second output arm 68 is fixed to the operation transmission shaft 7. Therefore, the second output arm 68 rotates integrally with the operation transmission shaft 7. A thickness direction of the second output arm 68 is parallel to the rotation axis of the operation transmission shaft 7. Therefore, rotation of the second output arm 68 is performed in the plane perpendicular to the rotation axis of the operation transmission shaft 7.

The second input arm 69 is disposed above an upper end of the output cylinder portion 79. The second input arm 69 is a plate-shaped member formed in a substantially rhombus shape. The second input arm 69 includes a pair of left and right arm portions.

The second input arm 69 is fixed to the steering output shaft 8. Therefore, the second input arm 69 rotates integrally with the steering output shaft 8. A thickness direction of the second input arm 69 is parallel to a rotation axis of the steering output shaft 8. Therefore, rotation of the second input arm 69 is performed in a plane perpendicular to the rotation axis of the steering output shaft 8.

A pair of left and right link rods 70 are provided. Each of the link rods 70 is disposed in an elongated manner in the front-rear direction in the plan view.

One link rod 70 couples a left end of the second output arm 68 and a left end of the second input arm 69. The other link rod 70 couples a right end of the second output arm 68 and a right end of the second input arm 69. Similarly to the first link mechanism 61, spherical bearings (bearings having three degrees of freedom) are used for all of the four coupling portions. Accordingly, an assembly error and the like can be absorbed, and a smooth operation can be implemented.

In this configuration, when the operation transmission shaft 7 rotates, the two link rods 70 move in the plane perpendicular to the rotation axis of the operation transmission shaft 7, and the rotation is transmitted to the steering output shaft 8. In this way, the steering output shaft 8 can be rotated by the same angle in conjunction with the rotation of the operation transmission shaft 7.

The link rods 70 of the second link mechanism 62 are disposed so as to rise forward in the side view. The link rods 70 extend forward and upward while passing below the baggage receiving portion 80. Locations where the link rods 70 intersect with the down tube 78 in the side view are close to a portion where a front end portion of the baggage receiving portion 80 is fixed to the down tube 78.

A height of the second output arm 68 fixed to the operation transmission shaft 7 is sufficiently lower than a height of the baggage receiving portion 80. Accordingly, it is possible to prevent the link rods 70, which are disposed so as to rise forward, from interfering with the baggage receiving portion 80.

The down tube 78 is fixed with a protection cover (protection member) 85. The protection cover 85 is a plate-shaped member. The protection cover 85 is disposed so as to cover portions of the pair of left and right link rods 70 below a lower surface of the down tube 78. Accordingly, it is possible to protect the link rods 70 from being damaged by a projection or the like on a road surface.

Next, the lean mechanism 40 for implementing leaning of the vehicle body 2 will be described.

The lean mechanism 40 is attached to a front end portion of the frame 3. As shown in Fig. 3, the lean mechanism 40 includes an upper arm (arm member) 41, a lower arm (arm member) 42, a left support member 11, and a right support member 21. The upper arm 41, the lower arm 42, the left support member 11, and the right support member 21 are bonded in a parallelogram shape by an appropriate bearing. In this way, the lean mechanism 40 implements the leaning of the vehicle body 2 by the parallel link mechanisms.

The upper arm 41 and the lower arm 42 are disposed parallel to each other, and are rotatably supported by the front end portion of the down tube 78. Left ends of the upper arm 41 and the lower arm 42 are bonded to each other by the left support member 11, and right ends of the upper arm 41 and the lower arm 42 are bonded to each other by the right support member 21.

The left support member 11 rotatably supports the left front wheel 10. The left support member 11 can pivot leftward and rightward about a left pivot axis (first pivot axis) extending in the up-down direction with respect to the upper arm 41 and the lower arm 42.

The right support member 21 rotatably supports the right front wheel 20. The right support member 21 can pivot leftward and rightward about a right pivot axis (second pivot axis) extending in the up-down direction with respect to the upper arm 41 and the lower arm 42.

The left pivot axis and the right pivot axis are parallel to each other. In addition, the two pivot axes are parallel to any of the steering shaft 6, the operation transmission shaft 7, and the steering output shaft 8.

The parallel link mechanisms included in the lean mechanism 40 maintain a posture of the frame 3, a posture of the left support member 11, and a posture of the right support member 21 to be always parallel to one another in a front view. Therefore, the left front wheel 10 and the right front wheel 20 can be inclined relative to the road surface in conjunction with leftward and rightward inclination of the vehicle body 2 (frame 3) relative to the road surface in a front view.

The steering output shaft 8 protrudes downward from the output cylinder portion 79, and this portion is fixed with a transmission arm 35. The transmission arm 35 pivots leftward and rightward integrally with the steering output shaft 8.

Steering rods 19 are provided to couple the transmission arm 35 and the left support member 11 as well as the transmission arm 35 and the right support member 21. Accordingly, it is possible to pivot the left front wheel 10 and the right front wheel 20 in conjunction with the rotation of the steering output shaft 8.

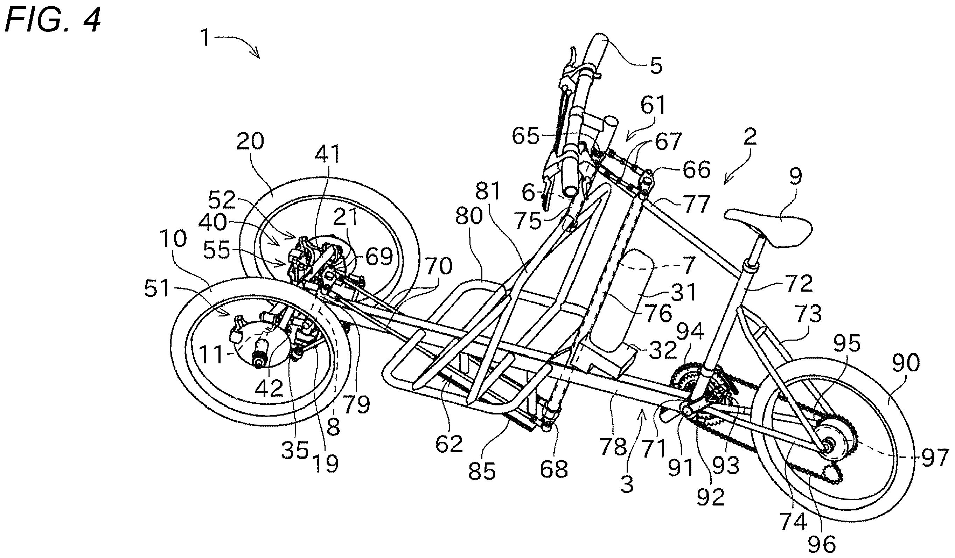

The steering shaft 6, the first link mechanism 61, the operation transmission shaft 7, the second link mechanism 62, the steering output shaft 8, the transmission arm 35, and the steering rods 19 constitute an interlocking mechanism that pivots the left front wheel 10 and the right front wheel 20 in conjunction with the operation on the handle 5. Fig. 4 shows a state in which the handle 5 is turned to left.

Effective lengths of the first output arm 65 and the first input arm 66 are equal to each other. Effective lengths of the second output arm 68 and the second input arm 69 are equal to each other. Therefore, since an operation angle of the handle 5 and a rotation angle of the steering output shaft 8 coincide with each other, it is possible to obtain an operation feeling as if the handle 5 is directly coupled to the steering output shaft 8. As a result, the operability is good.

A brake mechanism 51 is disposed on the left front wheel 10, and a brake mechanism 52 is disposed on the right front wheel 20. Accordingly, the left front wheel 10 and the right front wheel 20 can be braked. A lean brake 55 is disposed above the lean mechanism 40. Accordingly, the leaning of the vehicle body 2 can be braked. As the brake mechanisms 51 and 52 and the lean brake 55, a known disc brake mechanism can be used.

As described above, the three-wheeled bicycle 1 according to the present embodiment includes the vehicle body 2, the front wheels 10 and 20, and the handle 5. The front wheels 10 and 20 are rotatably supported by the vehicle body 2 and can pivot about the pivot axes. The handle 5 is rotationally operated to pivot the front wheels 10 and 20. In the side view of the vehicle, the steering shaft 6 when the handle 5 is operated is disposed behind the pivot axes of the front wheels 10 and 20. The steering shaft 6 is parallel to the pivot axes of the front wheels 10 and 20. The pivot axes of the front wheels 10 and 20 are indicated by reference numeral c1 in Fig. 2.

Accordingly, it is possible to implement a layout in which a large space is easily secured in front of and below the steering shaft 6. In addition, since the steering shaft 6 and the pivot axes of the front wheels 10 and 20 are parallel to one another, the steering feeling is good.

The three-wheeled bicycle 1 according to the present embodiment includes the operation transmission shaft 7 that is rotatably supported. A rotational operation force of the handle 5 is transmitted to the front wheels 10 and 20 via the operation transmission shaft 7.

Accordingly, the degree of freedom in layout for transmitting the operation force of the handle 5 to the front wheels 10, 20 can be increased.

In the three-wheeled bicycle 1 according to the present embodiment, the rotation axis of the operation transmission shaft 7 is parallel to the pivot axes of the front wheels 10 and 20 in the side view of the vehicle.

Accordingly, the operation feeling is good.

The three-wheeled bicycle 1 according to the present embodiment includes the first link mechanism 61 that includes parallel link mechanisms and that couples the handle 5 and the operation transmission shaft 7.

Accordingly, the operation transmission shaft 7 can be rotated in conjunction with the handle 5 with a simple configuration.

In the three-wheeled bicycle 1 according to the present embodiment, the link rods 67 included in the first link mechanism 61 are coupled to the handle 5 and the operation transmission shaft 7 via spherical bearings.

Accordingly, it is possible to absorb backlash due to an assembly error or the like and to smoothly operate the first link mechanism 61.

In the three-wheeled bicycle 1 according to the present embodiment, the operation transmission shaft 7 is disposed behind the steering shaft 6.

Accordingly, a large space for, for example, the baggage compartment 80a can be secured immediately in front of the steering shaft 6.

The three-wheeled bicycle 1 according to the present embodiment includes the link rods 70 and the protection cover 85. The link rods 70 are coupled to the operation transmission shaft 7 and transmits the rotation of the operation transmission shaft 7 to the front wheels 10 and 20. The protection cover 85 protects the link rods 70 from an obstacle.

Accordingly, the link rods 70 can be prevented from being damaged.

In the three-wheeled bicycle 1 according to the present embodiment, the baggage compartment 80a is disposed behind the front wheel 10 and in front of the handle 5. The coupling portions 81 included in the frame 3 are disposed so as to pass through a left side and a right side of the baggage compartment 80a. Further, the coupling portion 81 of the frame 3 extends obliquely on the left side and the right side of the baggage compartment 81a.

Accordingly, it is possible to secure the wide baggage compartment 80a while preventing a decrease in mechanical strength.

In the three-wheeled bicycle 1 according to the present embodiment, the front wheels 10 and 20 include the left front wheel 10 and the right front wheel 20 that are disposed apart from each other in the left-right direction. The left front wheel 10 and the right front wheel 20 pivot in response to the operation on the handle 5.

Accordingly, the vehicle can stably travel even when a baggage is conveyed.

The three-wheeled bicycle 1 according to the present embodiment includes the electric motor 97 for a human-powered assistance or a self-propelling.

Accordingly, the three-wheeled bicycle 1 that is less likely to be tired can be obtained.

Although the preferred embodiment of the present disclosure has been described above, the above configurations can be modified as follows, for example. The change may be performed alone, or a plurality of changes may be performed in any combination.

The operation transmission shaft 7 may not be parallel to the steering shaft 6 and the steering output shaft 8. The operation transmission shaft 7 may be omitted, and the steering shaft 6 and the steering output shaft 8 may be coupled by an appropriate link mechanism.

In the first link mechanism 61, one link rod 67 can be omitted. In the second link mechanism 62, one link rod 70 can be omitted.

Normal bearings may be used, instead of the spherical bearings, at the coupling portions of the link rods 67 and 70.

At least one of the first link mechanism 61 and the second link mechanism 62 can be changed to a transmission mechanism other than the link mechanism. For example, a transmission mechanism using a gear or a chain may be used.

The protection cover 85 may be omitted.

The electric motor 97 may be omitted. Instead of the electric motor 97, for example, an engine may be mounted.

The configuration of the present disclosure can also be applied to a non-lean-type three-wheeled vehicle. The configuration of the present disclosure can also be applied to a two-wheel vehicle including only one front wheel.

## Claims

1. A traveling vehicle (1) comprising:
a vehicle body (2);
a front wheel (10, 20) that is rotatably supported on the vehicle body (2) and is pivotable about a pivot axis (c1);
an operation member (5) that is rotationally operated to pivot the front wheel (10, 20); and
a steering shaft (6) that is operated by the operation member (5), wherein
as viewed laterally the traveling vehicle (1), the steering shaft (6) is disposed behind the pivot axis (c1), and
the steering shaft (6) is substantially parallel to the pivot axis (c1).

2. The traveling vehicle (1) according to claim 1, further comprising:
an operation transmission shaft (7) supported rotatably on the vehicle body (2), wherein
a rotational operation force of the operation member (5) is transmitted to the front wheel (10, 20) via the operation transmission shaft (7).

3. The traveling vehicle (1) according to claim 2, wherein
as viewed laterally the traveling vehicle (1), a rotation axis of the operation transmission shaft (7) is substantially parallel to the pivot axis (c1).

4. The traveling vehicle (1) according to claim 2 or 3, further comprising:
a parallel link mechanism configured to couple the operation member (5) and the operation transmission shaft (7).

5. The traveling vehicle (1) according to claim 4, wherein
the parallel link mechanism includes a link member (67), and
the link member (67) is coupled to at least one of the operation member (5) and the operation transmission shaft (7) via a bearing having three degrees of freedom.

6. The traveling vehicle (1) according to claim 5, wherein
the link member (67) is substantially perpendicular to a rotation axis of the steering shaft (6), and substantially perpendicular to a rotation axis of the operation transmission shaft (7).

7. The traveling vehicle (1) according to any one of claims 2 to 6, wherein
the operation transmission shaft (7) is disposed behind the steering shaft (6).

8. The traveling vehicle (1) according to any one of claims 2 to 7, further comprising:
an interlocking member (70) coupled to the operation transmission shaft (7) and configured to transmit rotation of the operation transmission shaft (7) to the front wheel (10, 20).

9. The traveling vehicle (1) according to claim 8, further comprising:
a protection member (85) configured to protect the interlocking member (70) from an obstacle.

10. The traveling vehicle (1) according to any one of claims 1 to 9, wherein
a baggage compartment (80a) is disposed behind the front wheel (10, 20) and in front of the operation member (5), and
a frame (3) of the vehicle body (2) is disposed to pass through a left side and a right side of the baggage compartment (80a).

11. The traveling vehicle (1) according to claim 10, wherein
a coupling portion (81) of the frame (3) extends obliquely on the left side and the right side of the baggage compartment (80a).

12. The traveling vehicle (1) according to any one of claims 1 to 11, wherein
the front wheel (10, 20) includes a left front wheel (10) and a right front wheel (20), the left front wheel (10) and the right front wheel (20) being disposed apart from each other in a left-right direction, and
the left front wheel (10) and the right front wheel (20) pivot in response to the operation member (5) being operated.

13. The traveling vehicle (1) according to any one of claims 1 to 12, further comprising:
an electric motor (97) for a human-powered assistance or a self-propelling.
